# EUROPEAN PATENT APPLICATION

(11) **EP 4 439 798 A1**
(43) Date of publication of application: **02.10.2024**
(21) Application number: 24166295.6
(22) Date of filing: 26.03.2024
(51) Int. Cl.: H01M 10/613, H01M 10/653, H01M 50/213, H01M 50/262, H01M 50/291, H01M 10/6551, H01M 10/643

(54) **BATTERY PACK**

(30) Priority: 26.03.2023 KR 20230039394; 04.05.2023 KR 20230058404
(71) Applicant: Samsung SDI Co., Ltd., Yongin-si, Gyeonggi-do 17084 (KR)
(72) Inventor: Bae, Kwangsoo, 17084 Yongin-si, Gyeonggi-do (KR); Kim, Junseop, 17084 Yongin-si, Gyeonggi-do (KR)
(74) Representative: Gulde & Partner

(57) **Abstract**

A battery pack includes a plurality of battery cells arranged in a plurality of rows in a first direction and a plurality of rows along a second direction intersecting the first direction and a case including a base plate having a filling channel connected to an assembly position of the battery cell and extending along a third direction crossing the first and second directions from an outer side of the base plate toward the battery cells in adjacent rows along the second direction, the base plate extending across an inner side where the assembly position of the battery cell is formed and an outer side opposite to the inner side. In the battery pack including the plurality of battery cells each having opposite first and second end surfaces and a cooling plate for cooling the plurality of battery cells, the case extends across the first end surface of the plurality of battery cells.

## Description

### BACKGROUND

### 1. Field

The present disclosure relates to a battery pack.

### 2. Description of the Related Art

In general, a secondary battery may be charged and discharged, unlike a primary battery that cannot be charged. Secondary batteries are used as energy sources for mobile devices, electric vehicles, hybrid vehicles, electric bicycles, and uninterruptible power supplies. Depending on the type of an external device to which a secondary battery is applied, secondary batteries are used in the form of a single battery or a module in which multiple batteries are connected and bundled into a single unit.

### SUMMARY

According to the embodiments of the present disclosure, a battery pack includes a plurality of battery cells each including first and second end surfaces opposite to each other and a cooling plate for cooling the plurality of battery cells. By forming at least a side extending between the first and second end surfaces of the battery cell and a hole that may selectively extend toward the first end surface of the battery cell on a case extending across the first end surface of a plurality of battery cells, and by exposing the side surface of the battery cell or the first end surface of the battery cell together with the side surface of the battery cell toward the cooling plate or a thermal interface material that intermediates heat transfer with the cooling plate, a so-called bottom cooling on the bottom surface of the battery cell and side cooling on the side of the battery cell may be simultaneously achieved. A battery pack with improved cooling performance of the battery cells therein is provided.

Additional aspects will be set forth in part in the description which follows and, in part, will be apparent from the description, or may be learned by practice of the presented embodiments of the present disclosure.

According to an aspect of the present disclosure, there is provided a battery pack including a plurality of battery cells aligned in rows extending lengthwise in a first direction and a plurality of the rows being arranged in a second direction intersecting the first direction and a case, the case including a base plate having a filling channel connected to an assembly position of the battery cells and extending along a third direction crossing the first and second direction from an outer side of the base plate toward the battery cells in adjacent rows along the second direction, the base plate extending between an inner side thereof where the assembly position of the battery cells is formed and an outer side opposite to the inner side.

For example, the filling channel further includes a channel hole that is open in the second direction and exposes at least a portion of the battery cells.

For example, the channel hole exposes an outer circumferential surface of the battery cells toward the filling channel.

For example, the battery pack further includes assembly ribs surrounding outer circumferential surfaces of the battery cells, the assembly ribs being between battery cells of the plurality of battery cells to provide assembly positions of the battery cells, and the filling channel extends from the outer side of the base plate toward the assembly ribs and exposes the outer circumferential surface of the battery cell.

For example, the filling channel extends between battery cells of adjacent rows along the second direction, and exposes a portion of the outer circumferential surface of the battery cells around an apex curved position facing the second direction along the circumference of the outer circumferential surface of the battery cell along a second direction.

For example, the filling channel includes a pair of sidewalls facing each other along a second direction and each facing adjacent battery cells in adjacent rows, and a base wall drawn into the innermost side along the third direction and extending between the pair of sidewalls.

For example, the channel hole is formed in the sidewall of the filling channel.

For example, each battery cell of the plurality of battery cells includes first and second end surfaces opposite to each other along the third direction, and an outer circumferential surface connecting the first and second end surfaces to each other.

For example, the base plate includes an end wall extending across first end surfaces of the plurality of battery cells that are arranged along the first direction, and the filling channel includes a base wall drawn into an innermost side along the third direction toward between battery cells of adjacent rows along the second direction, and a sidewall connecting the step between the end wall of the base plate to the base wall.

For example, the filling channel is formed between battery cells of adjacent rows along the third direction between adjacent end walls on the base plate to cover the first end surfaces of the battery cells of adjacent rows along the second direction.

For example, the channel hole extends from a sidewall of the filling channel onto an end wall connected to the sidewall of the filling channel.

For example, the channel hole exposes a corner portion of a battery cell, the corner portion including an outer circumferential surface of the battery cell facing the sidewall of the filling channel and a first end surface of the battery cell facing the end wall.

For example, the channel hole is open along a second direction on a sidewall of the filling channel, and is open along the third direction on the end wall.

For example, the base plate extends across the first end surfaces of the plurality of battery cells, and the channel hole exposes an outer circumferential surface adjacent to the first end surface along the third direction.

For example, the channel hole is open along the second direction and exposes a portion of the outer circumferential surface of the battery cell around an apex curved position facing the second direction along the circumference of the outer circumferential surface of the battery cell.

For example, the battery pack further includes assembly ribs on the inner side of the base plate surrounding the outer circumferential surface of the battery cells to provide assembly positions of the plurality of battery cells, wherein the assembly ribs surround a portion of the outer circumferential surface of each battery cell along a circumference of the battery cell from an end wall covering the first end surface of the battery cell to a channel hole in a third direction, and the assembly ribs surround the entire outer circumferential surface of each battery cell along the circumference of the battery cell from a position outside the channel hole in a third direction.

For example, the channel hole is provided in an incision formed in the assembly rib surrounding the outer circumferential surface of battery cells of rows adjacent to each other along the second direction.

For example, the incision providing the channel hole expands from the assembly rib surrounding the outer circumferential surface of the battery cells of the adjacent rows along the second direction toward the end wall covering the first end surfaces of the battery cells of the adjacent rows, the incision formed in the assembly rib is open along the second direction, and the incision formed on the first end wall is open along the third direction.

For example, the incision formed on the first end wall extends in the inner side direction from the incision formed on the assembly rib toward the first end surface of each battery cell surrounded by the assembly rib.

For example, the base plate extends across the first end surfaces of the plurality of battery cells, and the base plate includes a plate hole exposing at least a portion of the first end surface.

For example, the plate hole is open along the third direction and exposes the first end surface of the battery cells.

For example, the battery pack further includes a cooling plate disposed on the base plate along the third direction, and a thermal interface material disposed between the base plate and the cooling plate.

For example, the base plate includes a plate hole open along a third direction to expose a first end surface of the battery cells, and a channel hole formed in a filling channel extending between the first end surfaces of battery cells of rows adjacent to each other along the second direction and drawn into between battery cells of rows adjacent to each other along the third direction and open along the second direction to expose an outer circumferential surface of the battery cells.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded perspective view of a battery pack according to embodiments of the present disclosure;
FIGS. 2 and 3 are perspective views of a part of the battery pack shown in FIG. 1, showing battery cells assembled in a case;
FIGS. 4 and 5 are perspective views showing the case shown in FIGS. 2 and 3, respectively,
FIG. 6 is an enlarged perspective view of a portion shown in FIG. 3; and
FIG. 7 is an exploded perspective view illustrating a cooling plate disposed on the case shown in FIG. 3.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to a preferred embodiment of the present disclosure will be described with reference to the accompanying drawings.

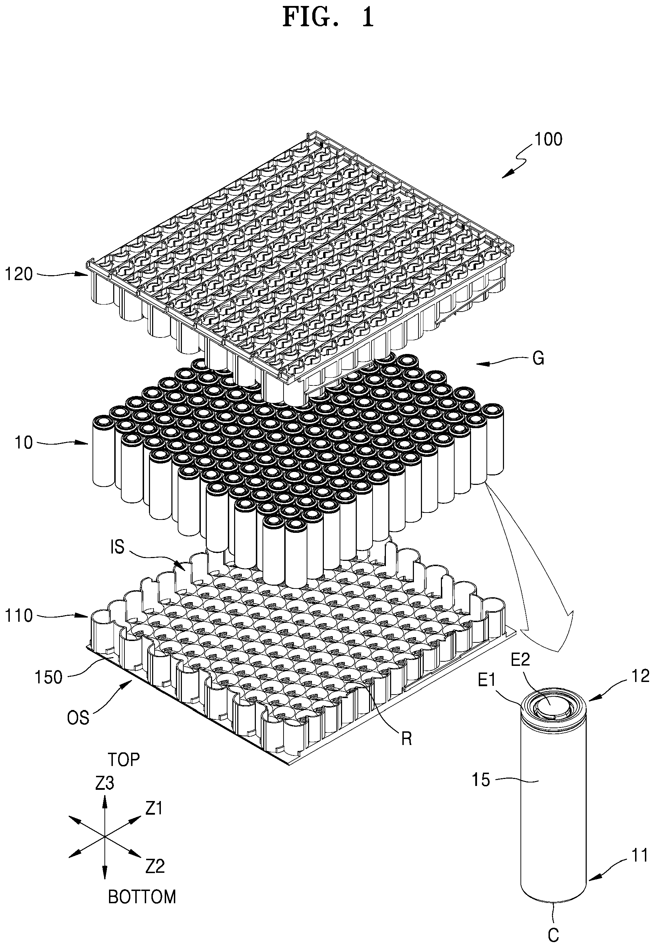

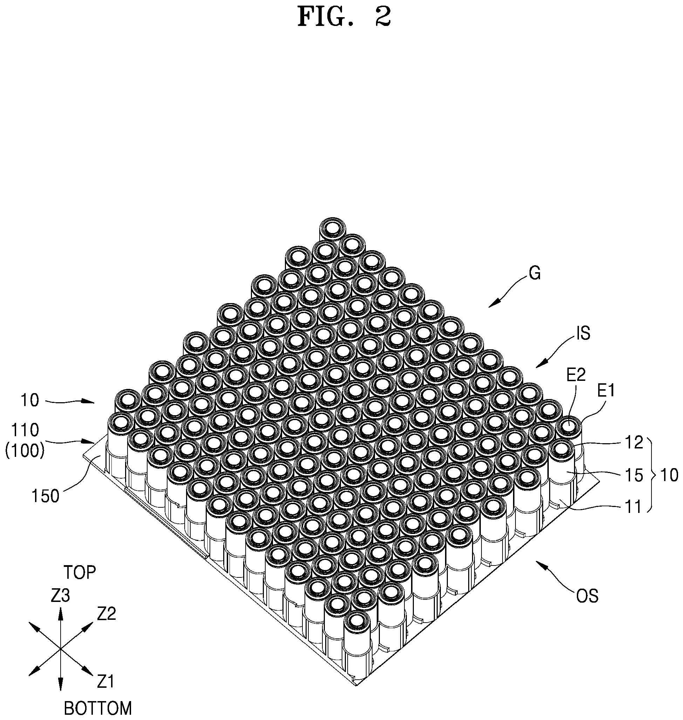

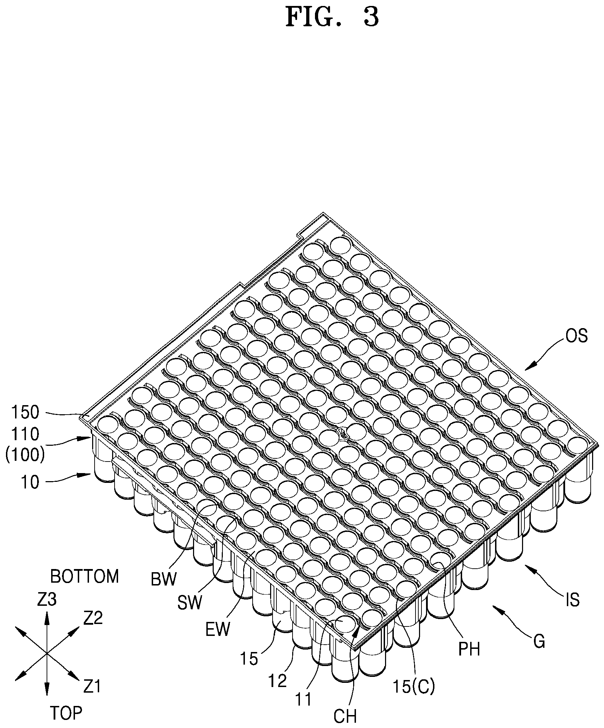

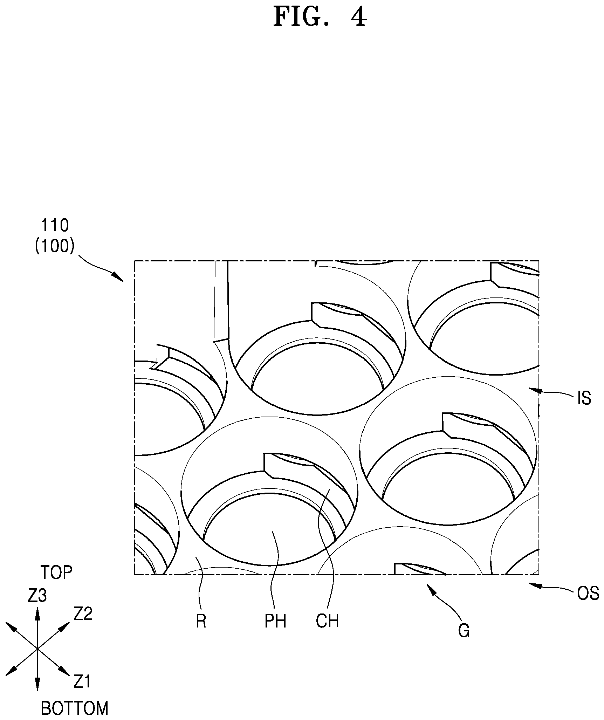

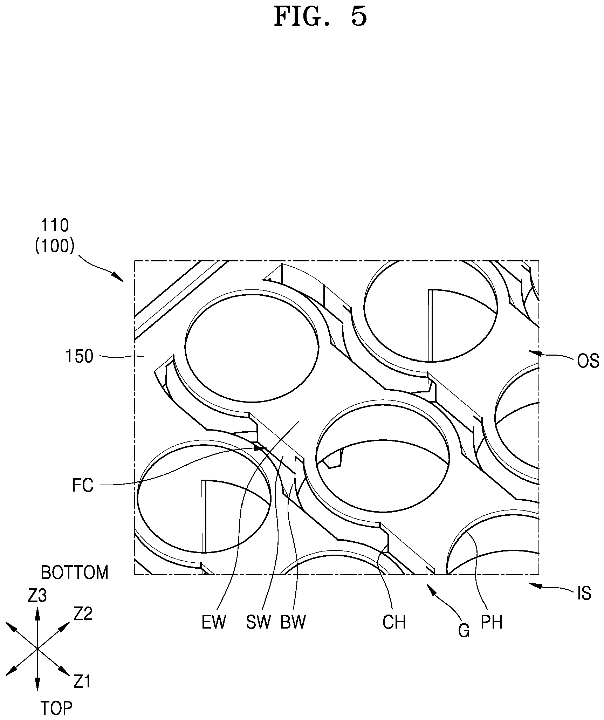

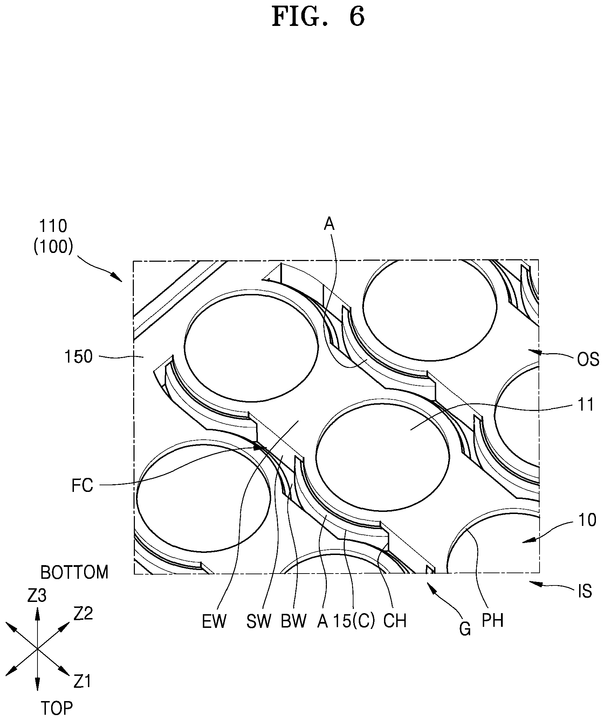

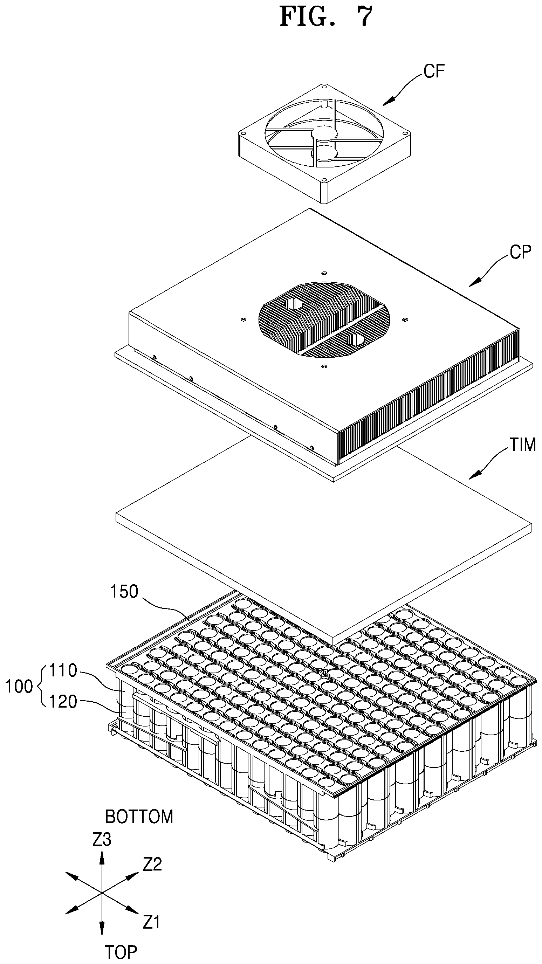

FIG. 1 is an exploded perspective view of a battery pack according to embodiments of the present disclosure. FIGS. 2 and 3 are perspective views of a part of the battery pack shown in FIG. 1, showing battery cells 10 assembled in a case 100. FIGS. 4 and 5 are perspective views showing the case 100 shown in FIGS. 2 and 3, respectively. FIG. 6 is an enlarged perspective view of a portion shown in FIG. 3. An enlarged perspective view of the battery cell 10 assembled in the case 100 is shown in FIG. 5. FIG. 7 is an exploded perspective view illustrating a cooling plate CP disposed on the case 100 shown in FIG. 3.

Referring to the drawings, the battery pack according to embodiments of the present disclosure may include the plurality of battery cells 10 and the case 100 providing an assembly position for the plurality of battery cells 10, and may further include the cooling plate CP disposed on one side of the case 100.

The plurality of battery cells 10 may be arranged along first and second directions Z1 and Z2. In embodiments of the present disclosure, the plurality of battery cells 10 may be arranged in a plurality of rows along the first direction Z1 and a plurality of rows along the second direction Z2 intersecting the first direction Z1. in the embodiments of the present disclosure, the battery cell 10 may have first and second end surfaces 11 and 12 on which the first and second electrode terminals E1 and E2 are formed face each other along a third direction Z3 crossing the first and second directions Z1 and Z2 and may be provided as a cylindrical battery cell 10 in which a side surface of an outer circumferential surface 15 is formed between the first and second end surfaces 11 and 12. Throughout this specification, the outer circumferential surface 15 of the battery cell 10 may refer to the side of the battery cell 10, and may refer to a side surface elongated along the third direction Z3 intersecting the first and second directions Z1 and Z2 to connect the first and second end surfaces 11 and 12 of the battery cell 10 to each other. However, in various embodiments of present disclosure, the battery cell 10 may be provided as a prismatic battery cell 10 having a hexagonal shape including a bottom surface disposed facing the terminal surface and a wide side and a narrow side connecting the terminal surface and the bottom surface along the terminal surface on which the first and second electrode terminals E1 and E2 are formed and along the third direction Z3.

In the embodiments of the present disclosure, the battery cells 10 may be arranged in rows along the first direction Z1, and as the rows of battery cells 10 adjacent to each other along the second direction Z2 are alternately skewed to each other in a front position or a rear position along the first direction Z1, in one row of battery cells 10 arranged along the first direction Z1, the battery cells 10 of another row may be arranged in a manner in which the battery cells 10 of the neighboring row are inserted between valleys of the battery cells 10 adjacent to each other, and while the battery cells 10 of another row are disposed to be inserted between the valleys of the battery cells 10 adjacent to each other, as a whole, the battery pack may be compacted, and a dense array may be formed by arranging a larger number of battery cells 10 in the same area.

A row of battery cells 10 throughout the present specification may mean a group of battery cells 10 arranged or aligned along the first direction Z1, and if the battery cells 10 in rows adjacent to each other are alternately skewed to the front position or the rear position along the first direction Z1, this may refer to a group of battery cells 10 arranged along the front-back direction (first direction Z1). In the embodiments of the present disclosure, the battery cell 10 may be provided as a cylindrical battery cell 10, and concave valleys may be formed between curved portions of the outer circumferential surfaces 15 adjacent to each other between the outer circumferential surfaces 15 of the battery cells 10 that form a row along the first direction Z1.

In the present disclosure, the case 100 may provide an assembly position of the battery cell 10, and in the embodiments of the present disclosure, that the case 100 provides an assembly position for the battery cell 10 may refer to that it covers any type of case 100 equipped with a structure capable of providing an accommodation space G in which the battery cells 10 are collectively accommodated or defining a position where each battery cell 10 is assembled.

In the embodiments of the present disclosure, the case 100 may collectively provide an accommodation space G for a plurality of battery cells 10 while defining an assembly position of each battery cell 10 forming a battery pack, and through this specification, the assembly position of the battery cell 10 may refer to a position where each battery cell 10 is assembled, and for example, the case 100 may include a plurality of assembly ribs R surrounding the outer circumferential surface 15 of each battery cell 10 to regulate the assembly position of each battery cell 10. In the embodiments of the present disclosure, the case 100 may extend across one end surface 11 or 12 of the first end surface 11 or the second end surface 12 of the plurality of battery cells 10 along the third direction Z3 crossing the first and second directions Z1 and Z2, and in the embodiments of the present disclosure, the case 100 may include a first case 110 extending across the first end surfaces 11 of the plurality of battery cells 10 and surrounding one side of the battery cells 10 along the third direction Z3, and a second case 120 disposed to face the first case 110 and extending across the second end surfaces 12 of the plurality of battery cells 10 and surrounding the other side of the battery cells 10 along the third direction Z3. In the embodiments of the present disclosure, the first and second cases 110 and 120 may collectively provide an accommodation space G for a plurality of battery cells 10 while defining an assembly position of the battery cells 10 forming a battery pack, and in this sense, throughout this specification, the first and second cases 110 and 120 or each of the first and second cases 110 and 120 disposed to face each other may be collectively referred to as the case 100. For example, hereinafter, the case 100 does not refer to only a configuration including the first and second cases 110 and 120 disposed to face each other, but may also refer to, for example, only the first case 110.

For example, in embodiments of the present disclosure, the case 100 (more specifically, the first case 110, hereinafter the same) may include a base plate 150 extending across the first end surface 11 of the battery cell 10. More specifically, the case 100 may include a base plate 150 extending across the first end surfaces 11 of the plurality of battery cells 10, and a plurality of assembly ribs R protruding from the base plate 150 in the third direction Z3 and surrounding the outer circumferential surface 15 of the battery cell 10. In the embodiments of the present disclosure, the assembly rib R may protrude from the base plate 150 along the third direction Z3 and surround the outer circumferential surface 15 adjacent to the first end surface 11 of the battery cell 10 along the third direction Z3. Throughout the present specification, the third direction Z3 may refer to a height direction of the battery cell 10 or an assembly direction of the battery cell 10, and each battery cell 10 may be assembled toward the assembly rib R along the third direction Z3. Also, the third direction Z3 may refer to a direction in which the filling channel FC is introduced from the outer side OS of the base plate 150 regarding the filling channel FC formed between the battery cells 10 in adjacent rows. This will be described in more detail later.

In the embodiments of the present disclosure, the assembly ribs R (into which each battery cell 10 is inserted) may be arranged on the base plate 150. In the assembly rib R, to match the arrangement of the plurality of battery cells 10, a row of assembly ribs R arranged along the first direction Z1 may include a plurality of assembly ribs R arranged in a plurality of rows along the second direction Z2. Through this specification, the arrangement of the battery cells 10 and the arrangement of the assembly ribs R that regulate the assembly position of each battery cell 10 may be formed in a form matched to each other on a plane formed by the first and second directions Z1 and Z2, and the arrangement of the assembly ribs (R) and the arrangement of the battery cells 10 may be formed in substantially the same shape.

In the embodiments of the present disclosure, while the base plate 150 extends across the first end surfaces 11 of the plurality of battery cells 10, the base plate 150 may extend across between an inner side IS where the battery cell 10 is assembled and an outer side OS opposite to the battery cell 10. For example, the base plate 150 may partition the inside and outside of the base plate 150 while extending across the inside and outside of the base plate 150. For example, the inner surface or inner side IS of the base plate 150 may mean one surface or one side of the base plate 150 facing the accommodation space G in which the battery cell 10 is accommodated, and the outer surface or outer surface OS of the base plate 150 may refer to the other surface or the other side of the base plate 150 facing the outside opposite to the accommodation space G in which the battery cells 10 are accommodated.

In the embodiments of the present disclosure, a filling channel FC may be formed in the base plate 150 from the outer side OS of the base plate 150 toward between the battery cells 10 in adjacent rows, and A channel hole CH open along the second direction Z2 to expose at least a portion of the battery cell 10 may be formed in the filling channel FC. And, the channel hole CH may allow a filling channel FC formed on the outer side OS of the base plate 150 to directly face each other between the battery cells 10 disposed on the inner side IS of the base plate 150, may expose the battery cell 10 disposed on the inner side IS of the base plate 150 to the filling channel FC, and the outer circumferential surface 15 of the battery cell 10 exposed through the channel hole CH may come into contact with the thermal interface material TIM filled in the filling channel FC.

In the embodiments of the present disclosure, the filling channel FC may be connected to the assembly position of the battery cells 10 while being introduced along the third direction Z3 toward between the battery cells 10 in adjacent rows along the second direction Z2, and as the assembly position where each battery cell 10 is disposed and the filling channel FC are connected to each other through the channel hole CH, the battery cell 10 at the assembly position may be exposed toward the filling channel FC.

In the embodiments of the present disclosure, the assembly position of the battery cell 10 may be defined by an assembly rib R surrounding the outer circumferential surface 15 of the battery cell 10 on the inner side IS of the base plate 150, and for example, assembly ribs R surrounding the outer circumferential surfaces 15 of the battery cells 10 in adjacent rows may be formed between battery cells 10 in adjacent rows along the second direction Z2. While being introduced from the outer side OS of the base plate 150 toward the assembly rib R formed between the battery cells 10 in adjacent rows along the second direction Z2, the filling channel FC may expose the outer circumferential surface 15 of the battery cell 10. At this time, in the filling channel FC, an incision corresponding to the channel hole CH may be formed on the assembly rib R surrounding the outer circumferential surface 15 of the battery cells 10 in rows adjacent to each other along the second direction Z2. Through this specification, an incision (corresponding to channel hole CH) formed while being drawn from the outer side OS of the base plate 150 toward the inner side IS of the base plate 150 where the assembly rib (R) is formed, or the channel hole CH connected to the assembly position formed on the inner side IS of the base plate 150 while being drawn from the outer side OS of the base plate 150 toward the inner side IS may refer to substantially the same configuration, and from the viewpoint of the assembly rib R formed between the battery cells 10 in adjacent rows on the inner side IS of the base plate 150, it may be understood that an incision (corresponding to the channel hole CH) is formed on the assembly rib R, and from the perspective of the filling channel FC formed on the outer side OS of the base plate 150, it may be understood that a channel hole CH connecting the charging channel of the outer side OS to the assembly position of the battery cell 10 of the inner side IS is formed. In the embodiments of the present disclosure, the assembly rib R may define an assembly position of the battery cell 10 while surrounding the outer circumferential surface 15 of the battery cell 10, and the incision (channel hole CH) formed on the assembly rib R may expose the outer circumferential surface 15 of the battery cell 10.

In the embodiments of the present disclosure, the base plate 150 may include an end wall EW extending across the first end surface 11 of the battery cell 10, and extending along the first direction Z1 across the first end surfaces 11 of the plurality of battery cells 10 arranged along the first direction Z1. The end wall EW of the base plate 150 may extend across the first end surface 11 of the battery cell 10, and in the embodiments of the present disclosure, the end wall EW may be formed in a form matched with the arrangement of the battery cells 10, and may be formed in a form matched with the arrangement of assembly ribs R defining the assembly position of the battery cell 10. For example, the end wall EW may be formed along the first direction Z1 along the row of the battery cells 10 arranged in the first direction Z1, and may be arranged in a plurality of rows along the second direction Z2 along the rows of the battery cells 10 adjacent to each other along the second direction Z2. The end walls EW may be alternately skewed in a front position and a rear position along the first direction Z1, with the end walls EW adjacent to each other along the second direction Z2, and a filling channel FC formed between battery cells 10 in rows adjacent to each other along the second direction Z2 may be formed between end walls EW adjacent to each other along the second direction Z2.

In the embodiments of the present disclosure, along the third direction Z3 from the outer side OS of the base plate 150, the end wall EW and the filling channel FC (more specifically, the base wall BW of the innermost side along the third direction Z3 corresponding to the incoming direction of the filling channel FC) formed in a form retracted from the end wall EW may form different levels, and the end wall EW extending along the first direction Z1 and the filling channel FC extending along the first direction Z1 may be alternately disposed along the second direction Z2 while forming different levels. At this time, a step may be formed along the third direction Z3 between the end wall EW and the filling channel FC drawn from the end wall EW to the inner side IS along the third direction Z3, and the end wall EW and the filling channel FC stepped with respect to each other, more specifically, the base wall BW of the end wall EW and the filling channel FC stepped with respect to each other may be connected to each other by the sidewall SW of the filling channel FC.

In the embodiments of the present disclosure, the filling channel FC may include a pair of sidewalls SW facing each other along the second direction Z2 and facing adjacent battery cells 10 in another row, and a base wall BW drawn into the innermost side as connecting between the pair of sidewalls SW along the third direction Z3 corresponding to the lead-in direction of the filling channel FC drawn from the outer side OS of the base plate 150 to the inner side IS. In this case, the channel hole CH may be formed on the sidewall SW of the filling channel FC.

The filling channel FC may include a base wall BW drawn into the innermost side along the third direction Z3 toward between the battery cells 10 in adjacent rows along the second direction Z2, and a sidewall SW connecting a step between the base wall BW and the end wall EW along the third direction Z3.

The filling channel FC may be formed in a form retracted between the battery cells 10 in rows adjacent to each other along the second direction Z2, and the outer circumferential surface 15 of the battery cell 10 may be exposed through the channel hole CH opened along the second direction Z2. At this time, the channel hole CH may expose a part of the outer circumferential surface 15 of the battery cell 10 toward the filling channel FC, and all of the outer circumferential surface 15 may not be exposed, and to form an assembly rib R for regulating the assembly position of the battery cell 10 while surrounding the outer circumferential surface 15, the channel hole CH may expose a part of the outer circumferential surface 15 of the battery cell 10 rather than exposing the entire outer circumferential surface 15 of the battery cell 10. For example, the channel hole CH and the assembly rib R may be formed at mutually exclusive positions along the circumference of the outer circumferential surface 15 of the battery cell 10, or the channel hole CH and the assembly rib R may be formed at mutually exclusive positions along the third direction Z3. The assembly rib R may not be formed at the position where the channel hole CH or incision is formed, and an assembly rib R may be formed in a channel hole CH or a position where an incision is not formed.

In the embodiments of the present disclosure, the channel hole CH may be formed between the end wall EW of the base plate 150 and the base wall BW of the filling channel FC along the third direction Z3, and the outer circumferential surface 15 of the battery cell 10 exposed by the channel hole CH along the third direction Z3 may correspond to a position from the first end surface 11 of the battery cell 10 covered by the end wall EW to a position where a channel hole CH is formed, and the outer circumferential surface 15 adjacent to the first end surface 11 of the battery cell 10 along the third direction Z3 may be exposed by the channel hole CH. In terms of the assembly rib R, the assembly rib R may surround a part of the outer circumferential surface 15 of the battery cell 10 along the circumference of the battery cell 10 from the end wall EW covering the first end surface 11 of the battery cell 10 along the third direction Z3 to the position where the channel hole CH is formed, and the assembly rib R may surround the entire outer circumferential surface 15 of the battery cell 10 along the circumference of the battery cell 10 from a position outside the channel hole CH along the third direction Z3.

In the embodiments of the present disclosure, the channel hole CH may expose a part of the outer circumferential surface 15 along the circumference of the outer circumferential surface 15 of the battery cell 10, and through the channel hole CH opened along the second direction Z2, a part of the outer circumferential surface 15 of the battery cell 10 may be exposed around the apex curved position A facing the second direction along the circumference of the outer circumferential surface 15 of the battery cell 10. Through this specification, the battery cell 10 may extend with both ends of the first and second end surfaces 11 and 12 along the third direction Z3, and an axis crossing the centrifugal center of the battery cell 10 may be defined along the third direction Z3, and as described below, the center of an axis or the rotational angle of an axis may refer to a centrifugal angle of the battery cell 10 or a rotational angle along the circumference of the outer circumferential surface 15 of the battery cell 10 centered on the centrifugal center of the battery cell 10.

In the embodiments of the present disclosure, with the axis of the battery cell 10 as the center, the range of the rotational angle in which the channel hole CH is formed or the range of the rotational angle of the outer circumferential surface 15 exposed to the filling channel FC through the channel hole CH centered on the axis of the battery cell 10 may include the range of the same rotational angle measured on both sides along the positive (+)/negative (-) rotation direction centered on the apex curved position A facing the second direction of the outer circumferential surface 15 . For example, in embodiments of the present disclosure, the outer circumferential surface 15 of the battery cell 10 exposed through the channel hole CH opened along the second direction Z2 may be formed on both sides around the apex curved position A of the outer circumferential surface 15 facing the second direction Z2 in which the channel hole CH is opened, and for example, along the positive (+)/negative (-) direction of rotation on both sides around the apex curved position A facing the second direction Z2, an outer circumferential surface 15 belonging to a range of a certain rotational angle may be exposed through the channel hole CH. For example, in the embodiments of the present disclosure, the apex curved position A forming the center position of the outer circumferential surface 15 of the battery cell 10 exposed to the filling channel FC may refer to a position on the outer circumferential surface 15 perpendicular to the second direction Z2 along the outer circumferential surface 15 of the battery cell 10, and for example, may refer to a position corresponding to the first direction Z1 where the tangential direction of the outer circumferential surface 15 intersects the second direction Z2 at each position along the outer circumferential surface 15. For example, for each battery cell 10, along the rotational angle centered on the axis of the battery cell 10, an apex curved position A facing the second direction Z2 may be formed at both sides of the battery cell 10, and based on the apex curved position (A) formed on both sides of each battery cell 10, along the perimeter of the battery cell 10, both locations may be exposed to the filling channel FC through the channel hole CH. In the embodiments of the present disclosure, the filling channel FC generally extends along the first direction Z1 along between the battery cells 10 in rows adjacent to each other along the second direction Z2, and with the outer circumferential surface 15 of the battery cell 10 as the tangential direction in the first direction Z1 as the center, a channel hole CH exposing a part of the outer circumferential surface 15 may be formed along the second direction Z2.

In terms of the assembly rib R, the assembly rib R may surround the outer circumferential surface 15 of the battery cell 10 out of the range of the rotational angle at which the channel hole CH is formed around the axis of the battery cell 10, for example, among the outer circumferential surface 15 of the battery cell 10 from the end wall EW of the base plate 150 surrounding the first end surface 11 of the battery cell 10 to the height of the channel hole CH along the third direction Z3, may surround the outer circumferential surface 15 belonging to the angular range in which the channel hole CH is not formed, and may surround the entire outer circumferential surface 15 of the battery cell 10 from a position outside the channel hole CH along the third direction Z3.

In the embodiments of the present disclosure, the channel hole CH may be formed on a sidewall SW of the filling channel FC facing the outer circumferential surface 15 of the battery cells 10 in adjacent rows along the second direction Z2, and may be formed on an assembly rib R surrounding the outer circumferential surface 15 of the battery cells 10 in rows adjacent to each other along the second direction Z2, and the channel hole CH may expose the outer circumferential surface 15 of the battery cell 10.

In the embodiments of the present disclosure, the channel hole CH may extend onto the end wall EW of the base plate 150 adjacent to the sidewall SW of the filling channel FC, and the channel hole CH may extend onto the end wall EW of the base plate 150 adjacent to the assembly rib R, and may expose a first end surface 11 of the battery cell 10 facing the end wall EW. At this time, the channel hole CH may expose the corner portion C of the battery cell 10 including the outer circumferential surface 15 of the battery cell 10 facing the sidewall SW of the filling channel FC and the first end surface 11 of the battery cell 10 facing the end wall EW, and the channel hole CH may be opened along the second direction Z2 on the sidewall SW of the filling channel FC, and may be opened along the third direction Z3 on the end wall EW.

The channel hole CH may be formed by an incision on the assembly rib R, and the incision may extend from the assembly rib R surrounding the outer circumferential surface 15 of the battery cells 10 in rows adjacent to each other along the second direction Z2 towards the end wall EW covering the first end surfaces 11 of the battery cells 10 in adjacent rows, and at this time, the incision formed on the assembly rib R may be opened along the second direction Z2, and the incision formed on the first end wall EW may be opened along the third direction Z3. At this time, the incision formed on the first end wall EW may extend in an inner side direction from an incision formed on the assembly rib (R) toward the first end surface 11 of each battery cell 10 surrounded by the assembly rib R.

In the embodiments of the present disclosure, the base plate 150 may include end walls EW extending along the first direction Z1 across the first end surfaces 11 of the plurality of battery cells 10, and a plate hole PH exposing the first end surface 11 of the battery cell 10 may be formed on the end wall EW. In this case, the plate hole PH may be opened along the third direction Z3 to expose the first end surface 11 of the battery cell 10.

In the embodiments of the present disclosure, the plate hole PH may expose a portion of the first end surface 11 of the battery cell 10 to the outer side OS of the base plate 150, and in the embodiments of the present disclosure, the plate hole PH may expose a part of the first end surface 11 of the battery cell 10 rather than exposing the entire first end surface 11 of the battery cell 10, and the plate hole PH may have an outer circumference smaller than that of a circular outline formed by the first end surface 11 of the battery cell 10 among the first end surfaces 11 of the battery cell 10, and to prevent the first end surface 11 of the battery cell 10 from escaping to the outer side OS of the base plate 150 through the plate hole PH, a holding step for the first end surface 11 of the battery cell 10 may be formed through the remaining portion of the end wall EW except for the plate hole PH.

referring to FIG. 7, in the present disclosure, a cooling plate CP may be disposed on the base plate 150. For example, the base plate 150 and the cooling plate CP may face each other along the third direction Z3, and a thermal interface material TIM may be disposed. In the embodiments of the present disclosure, the thermal interface material TIM may mediate heat transfer between the base plate 150 and the cooling plate CP, and for example, the thermal interface material TIM may include thermally conductive glue equipped with an adhesive function for fixing the position between the base plate 150 and the cooling plate CP, and having sufficient heat transfer characteristics to mediate heat transfer between the base plate 150 and the cooling plate CP.

In the embodiments of the present disclosure, the thermal interface material TIM may have various states such as solid, liquid, and gel, and for example, in embodiments of the present disclosure, the thermal interface material TIM may have a state in which compression or flow is possible between the base plate 150 and the cooling plate CP, and more specifically, a thermal interface material TIM made of thermally conductive glue is filled in the filling channel FC, and as the base plate 150 and the cooling plate CP are filled in the filling channel FC according to the bonding pressure for coupling to each other, and may directly contact the outer circumferential surface 15 or the first end surface 11 of the open battery cell 10 through the channel hole CH of the filling channel FC, and heat transfer between the battery cell 10 and the cooling plate CP may be mediated. In the embodiments of the present disclosure, the thermal interface material TIM may mediate heat transfer to the cooling plate CP while directly contacting the first end surface 11 of the battery cell 10 through the plate hole PH formed on the base plate 150 (more specifically, the end wall EW). In the embodiments of the present disclosure, the base plate 150 may be in direct contact with a thermal interface material TIM, and depending on the coupling pressure between the base plate 150 and the cooling plate CP via the thermal interface material TIM, the base plate 150 and the cooling plate CP may form a bond to each other according to the adhesive component of the thermal interface material TIM, and depending on the bonding pressure between the base plate 150 and the cooling plate CP, the thermal interface material TIM therebetween may contact the first end surface 11 of the battery cell 10 through the plate hole PH formed on the base plate 150, and through the channel hole CH formed in the filling channel FC while filling the filling channel FC may contact with or including the outer circumferential surface 15 of the battery cell 10, so that the corner portion C of the battery cell 10 including the outer circumferential surface 15 and the first end surface 11 of the battery cell 10 adjacent to the outer circumferential surface 15 may be contacted.

In the embodiments of the present disclosure, the thermal interface material TIM may contact the first end surface 11 of the battery cell 10 through a plate hole PH formed on an end wall EW protruding from the base plate 150 toward the thermal interface material TIM relatively along the third direction Z3, and the outer circumferential surface 15 and the first end surface 11 of the battery cell 10 may contact the corner portion C of the battery cell 10 through the channel hole CH exposed on the filling channel FC while filling the filling channel FC between the end walls EW adjacent to each other along the second direction Z2. As such, in the embodiments of the present disclosure, through the plate hole PH and the channel hole CH formed in different orientations, or through the plate hole PH open along the third direction Z3 and the channel hole CH open along the second direction Z2, with the first end surface 11 of the battery cell 10, by exposing the outer circumferential surface 15 of the battery cell 10 together with a thermal interface material TIM, it does not simply support bottom cooling through the first end surface 11 of the battery cell 10, but also bottom cooling through the first end surface 11 of the battery cell 10, and by supporting side cooling through the outer circumferential surface 15 of the battery cell 10, cooling efficiency of the battery cell 10 may be increased.

In the embodiments of the present disclosure, the cooling plate CP may be disposed at a position facing the blowing position of the cooling fan CF, and for example, the cooling plate CP may dissipate heat transferred from the battery cell 10 through a cooling fluid (not shown) cooled to a low temperature through the low-temperature external atmosphere forcibly blown from the cooling fan CF or a cooling circuit (not shown) provided inside the battery pack.

In the embodiments of the present disclosure, through the first end surface 11 on which the base plate 150 is disposed and the outer circumferential surface 15 adjacent to the first end surface 11, the battery cell 10 may implement cooling of the battery cell 10, and electrical connection may be implemented through the second end surface 12 opposite to the first end surface 11 along the third direction Z3. For example, by implementing cooling and electrical connection through the first and second end surfaces 11 and 12 opposite to each other of the battery cell 10, electrical insulation between them may be easily achieved, and a separate insulation structure may not be required. In the embodiments of the present disclosure, different first and second electrode terminals E1 and E2 may be formed together on the second end surface 12, and for example, the first electrode terminal E1 may extend from the first end surface 11 of the battery cell 10 to the edge of the second end surface 12 via the outer circumferential surface 15, and the second electrode terminal E2 may be formed at a central position surrounded by the first electrode terminal E1 formed at the edge position of the second end surface 12, and through a bus bar (not shown) connected to the second electrode terminal E2 and the first electrode terminal E1 formed at the center and edge of the second end surface 12, respectively, the battery cells 10 adjacent to each other may be electrically connected to each other.

By way of summation and review, mobile devices such as mobile phones may operate for a certain amount of time with the output and capacity of a single battery. If long-term driving and high-power driving are required, e.g., electric vehicles and hybrid vehicles that consume a lot of power, a module type including a plurality of batteries may be used due to issues regarding the output and capacity of the batteries, and thus, the output voltage or output current may be increased according to the number of built-in batteries.

According to the present disclosure, in a battery pack including a plurality of battery cells each having opposite first and second end surfaces and a cooling plate for cooling the plurality of battery cells, on a case extending across the first end surface of a plurality of battery cells, by forming at least a side connecting between the first and second end surfaces of the battery cell and a hole that may selectively extend toward the first end surface of the battery cell, and by exposing the side surface of the battery cell or the first end surface of the battery cell together with the side surface of the battery cell toward the cooling plate or a thermal interface material that mediates heat transfer with the cooling plate, with so-called bottom cooling on the bottom surface of the battery cell, a battery pack capable of improving cooling performance of a battery cell by simultaneously implementing side cooling on the side of the battery cell is provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cells (10) aligned in rows extending lengthwise in a first direction and a plurality of the rows being arranged in a second direction intersecting the first direction and
a case (100), the case (100) including a base plate (150) having a filling channel connected to an assembly position of the battery cells (10) and extending along a third direction crossing the first and second direction from an outer side of the base plate (150) toward the battery cells (10) in adjacent rows along the second direction, the base plate (150) extending between an inner side thereof where the assembly position of the battery cells (10) is formed and an outer side opposite to the inner side.

2. The battery pack as claimed in claim 1, wherein the filling channel further includes a channel hole that is open in the second direction and exposes at least a portion of the battery cells (10)and/or wherein the channel hole exposes an outer circumferential surface (15) of the battery cells (10) toward the filling channel.

3. The battery pack as claimed in claim 1, wherein assembly ribs surrounding outer circumferential surfaces (15) of the battery cells (10) are formed between battery cells (10) of rows adjacent to each other along the second direction to regulate assembly positions of the battery cells (10), and
wherein the filling channel extends from the outer side of the base plate (150) toward the assembly ribs and exposes the outer circumferential surface (15) of the battery cell (10).

4. The battery pack as claimed in claim 1, wherein the filling channel extends between battery cells (10) of adjacent rows along the second direction, and exposes a portion of the outer circumferential surface (15) of the battery cells (10) around an apex curved position facing the second direction along the circumference of the outer circumferential surface (15) of the battery cell (10) along the second direction and/or, wherein the filling channel comprises:
a pair of sidewalls facing each other along a second direction and each facing adjacent battery cells (10) in adjacent rows; and
a base wall drawn into the innermost side along the third direction and extending between the pair of sidewalls.

5. The battery pack as claimed in at least one of the preceding claims, wherein the channel hole is formed in the sidewall of the filling channel and/or wherein the channel hole extends from a sidewall of the filling channel onto an end wall connected to the sidewall of the filling channel and/or wherein the channel hole exposes a corner portion of a battery cell (10), the corner portion including an outer circumferential surface (15) of the battery cell (10) facing the sidewall of the filling channel and a first end surface (11) of the battery cell (10) facing the end wall and/or
wherein the channel hole is open along a second direction on a sidewall of the filling channel, and is open along the third direction on the end wall.

6. The battery pack as claimed in claim 1, wherein each of the plurality of battery cells (10) comprises:
first and second end surfaces (11, 12) opposite to each other along the third direction; and
an outer circumferential surface (15) connecting the first and second end surfaces (11, 12) to each other.

7. The battery pack as claimed in at least one of the preceding claims, wherein the base plate (150) comprises an end wall extending across first end surfaces (11) of the plurality of battery cells (10) arranged along the first direction, and
wherein the filling channel comprises:
a base wall drawn into an innermost side along a third direction toward between battery cells (10) of adjacent rows along the second direction; and
a sidewall connecting the step between the end wall of the base plate (150) to the base wall.

8. The battery pack as claimed in claim 7, wherein the filling channel is drawn into between battery cells (10) of adjacent rows along the third direction between adjacent end walls formed on the base plate (150) to cover the first end surfaces (11) of the battery cells (10) of adjacent rows along the second direction.

9. The battery pack as claimed in at least one of the preceding claims, wherein the base plate (150) extends across the first end surfaces (11) of the plurality of battery cells (10), and
wherein the channel hole exposes an outer circumferential surface (15) adjacent to the first end surface (11) along the third direction.

10. The battery pack as claimed in at least one of the preceding claims, wherein the channel hole is open along the second direction to expose a portion of the outer circumferential surface (15) of the battery cell (10) around an apex curved position facing the second direction along the circumference of the outer circumferential surface (15) of the battery cell (10) and/or wherein the channel hole is provided in an incision formed in the assembly rib surrounding the outer circumferential surface (15) of battery cells (10) of rows adjacent to each other along the second direction.

11. The battery pack as claimed in at least one of the preceding claims, wherein assembly ribs are formed on the inner side of the base plate (150) to surround the outer circumferential surface (15) of the battery cells (10) to regulate assembly positions of the plurality of battery cells (10),
wherein the assembly ribs surround a portion of the outer circumferential surface (15) of each battery cell (10) along a circumference of the battery cell (10) from an end wall covering the first end surface (11) of the battery cell (10) to a channel hole in a third direction, and
wherein the assembly ribs surround the entire outer circumferential surface (15) of each battery cell (10) along the circumference of the battery cell (10) from a position outside the channel hole in a third direction.

12. The battery pack as claimed in at least one of the preceding claims, wherein the incision providing the channel hole expands from the assembly rib surrounding the outer circumferential surface (15) of the battery cells (10) of the adjacent rows along the second direction toward the end wall covering the first end surfaces (11) of the battery cells (10) of the adjacent rows,
wherein the incision formed in the assembly rib is open along the second direction, and
wherein the incision formed in the first end wall is opened along the third direction and/or wherein the incision formed in the first end wall extends in the inner side direction from the incision formed on the assembly rib toward the first end surface (11) of each battery cell (10) surrounded by the assembly rib.

13. The battery pack as claimed in at least one of the preceding claims , wherein the base plate (150) extends across the first end surfaces (11) of the plurality of battery cells (10), and
wherein a plate hole exposing at least a portion of the first end surface (11) is formed in the base plate (150) and/or wherein the plate hole is open along the third direction to expose the first end surface (11) of the battery cells (10).

14. The battery pack as claimed in claim 1, further comprising:
a cooling plate disposed on the base plate (150) along the third direction; and
a thermal interface material disposed between the base plate (150) and the cooling plate.

15. The battery pack as claimed in claim 1, wherein the base plate (150) comprises:
a plate hole opened along a third direction to expose a first end surface (11) of the battery cells (10); and
a channel hole formed in a filling channel extending between the first end surfaces (11) of battery cells (10) of rows adjacent to each other along the second direction and drawn into between battery cells (10) of rows adjacent to each other along the third direction and opened along the second direction to expose an outer circumferential surface (15) of the battery cells (10).
